# EUROPEAN PATENT SPECIFICATION

(11) **EP 3 534 546 B1**
(45) Date of publication and mention of the grant of the patent: **29.09.2021**
(21) Application number: 18159256.9
(22) Date of filing: 28.02.2018
(51) Int. Cl.: H04B 3/54, H04B 3/56

(54) **A FILTERING DEVICE FOR POWER LINE COMMUNICATION**
EINE FILTERVORRICHTUNG FÜR DIE STROMLEITUNGSKOMMUNIKATION
DISPOSITIF DE FILTRAGE POUR COMMUNICATION PAR LIGNE ÉLECTRIQUE

(43) Date of publication of application: 04.09.2019
(73) Proprietor: Nokia Solutions and Networks Oy, 02610 Espoo (FI)
(72) Inventor: Timmers, Michael, 2018 Antwerpen (BE)
(74) Representative: IP HILLS NV

(56) References cited:
- WO-A1-2010/100952
- US-A1- 2003 156 370

## Description

### Technical Field

The present invention generally relates to power line communication systems, and more specifically to the improvement of power line communication between different power line branches.

### Background

A power line communication system uses existing electrical wiring to provide communication channels between various distributed locations. For example, in a domestic electrical installation the existing wiring is utilised to let a computer in a bedroom communicate with a router connected to the internet which is situated in a living room. Thus, besides power carrying currents the electrical wiring in the electrical installation may also carry communication signals.

Often, existing connection points in the electrical installation, such as sockets, are used to inject these communication signals by the use of custom made adapters. Accordingly, an adapter in a socket of the bedroom communicates with an adapter in a socket of the living room. Generally, the power line branch to which the socket in the bedroom is connected differs from the power line branch to which the socket in the living room is connected. These power line branches are each protected by a fuse and/or a circuit breaker. Moreover, besides a power line branch for the living room and one for a bedroom, several other power line branches are present in a real-life domestic electrical installation, such as one for a bathroom and one for a kitchen.

As a result, communication signals exchanged between the adapters of the bedroom and the living room will not only pass through the protecting devices of their respective power line branches but will also be present or exposed to other power line branches of the domestic electrical installation.

WO 2010/100952 A1 discloses a power supply device which when charging an external device provided outside home can integrate a separate network after ensuring security and allow communication between an outside power line network and a home power line network. The power supply device is provided with a filter unit disposed between the external device and a power receiving unit connected to the home power line supply which blocks the passage of a communication signal superimposed on the power transmitted between the external device and devices connected to the home power line network, and, a bypass unit for bypassing the filter unit. A control unit is further provided for controlling the bypass unit.

US 2003/015370 A1 discloses a power distribution panel including circuit breakers for a commercial power supply and filters for transmitting high frequency signals between the upstream line and the downstream line of the individual circuit breakers and cutting off the frequency of signals sent from the commercial power line.

### Summary

It is however a drawback that communication signals within a power line communication system are transmitted to all power line branches. Since the communication signals are attenuated in this way, there is the necessity of an additional functioning of the power line communication system to amplify the communication signals. Besides, electrical devices may cause noise signals injected on the power line branch to which they are connected thereby deteriorating the functioning of the power line communication system.

It is therefore an object to overcome the above identified drawbacks and to provide a solution for optimizing a power line communication system.

This object is achieved, in a first aspect, by a filtering device for filtering communication channels on a power line branch in a power line communication network, the filtering device having a first and a second contact, the filtering device comprising a switch configured to switch between a pass-through mode and a filtering mode, wherein:
- in the pass-through mode the first contact is directly connected with the second contact and configured to pass through a power current frequency and the communication channels; and
- in the filtering mode the first contact is connected with the second contact through a first low pass filter;
characterized in that a cut-off frequency of the first low-pass filter is configured to pass through the power carrying current and to block one or more of the communication channels; and
that the filtering device is further configured to adjust the cut-off frequency of the first low-pass filter such that one or more communication channels are passed through in the filtering mode.

The power line branch may carry both communication channels and power carrying current. The frequency of a power carrying current is in the range of 50Hz, for example in Europe, and in the range of 60Hz, for example in the United States, while home-control power line communication systems typically operate in the frequency range of 20 to 200MHz. This latter range may differ depending on a used standard, nevertheless, it should be clear that the frequency range of communication channels in a power line communication network is significantly higher compared to the frequency range of power carrying currents.

The filtering device is configured to filter the communication channels on the power branch. In other words, the frequency range of the communications channels, for example in the range of 20 to 200MHz, is filtered or blocked, while the frequencies lower than this range are passed through. The filtering is performed by the use of a first low-pass filter with a cut-off frequency of, for example, 20MHz or even lower. This cut-off frequency may differ depending on the used power line communication standard. Frequencies lower than this cut-off frequency are passed through, while frequencies higher than this cut-off frequency are blocked. Furthermore, the cut-off frequency may also be adjusted in such a way that one or more higher frequency communication channels are blocked, while other lower ones are passed through.

Additionally, the filtering device and more specifically the first low-pass filter may be adapted to the power line communication network such that the device is suitable for a variety of standards of power line communication systems. Thus, prior to the bring into service of the communication network, the cut-off frequency is adapted thereby anticipation to the communication channels which will be present in the electrical installation.

The filtering device further comprises a switch configured to switch between the filtering mode on the one hand and the pass-through mode on the other hand. In the filtering mode, the first low-pass filter thus filters the communication channels, while in the pass-through mode, the low-pass filter is bypassed. Differently formulated, the switch either guides both the communication channels and the power carrying current through the low-pass filter or bypasses the filter. In the pass-through mode the first and second contacts are directly connected by, for example, a wire, while in the filtering mode the low-pass filter connects the contacts to each other.

The switch may be configured to interrupt the current and communication channels under load. The switching may further, for example, be performed manually.

An advantage of the filtering device is that the electrical installation which is used for power line communication may be adapted in such a way that communication channels are attenuated in power branches which are not deployed for power line communication and the desired path is not. Such power branches are, for example, branches which supply power to a bathroom or a basement and are generally not used in a power line communication network. In other power branches, the communication channels are not attenuated, such that the power line communication network within the electrical installation is set up in an optimal manner.

According to an embodiment, the filtering device further comprises a trigger module configured to trigger the switch based on a control signal.

Thus, the switching is initiated by the trigger module. The initiation of the triggering is based on a control signal. The trigger module may further comprise an interface configured to receive said control signal. The control signal is, for example, a pulse or a wireless signal. In this way, the switch may be managed remotely, such that an intervention is performed in a fast manner when, for example, a set-up of the power line communication network needs to be changed or adapted.

According to an embodiment, the trigger module is further configured to receive the control signal through the first and/or second contact.

The control signal is either imposed on the first or second contact or on both. The trigger module which receives the control signal is then configured to block the power carrying current and communication channels such that there is no additional connection between both contacts of the filtering device thereby bridging the functioning of the filtering device. This is, for example, achieved by combining a low-pass filter with a high-pass filter in the trigger module adapted to the frequency of the low-frequency control channel. Advantageously, the low-frequency control channel may be imposed in the electrical installation without interfering with neither the power carrying current nor the communication channels of the power line communication network. Secondly, there is no further need for additional wiring to trigger the trigger module.

According to an embodiment, the control signal is a low-frequency control signal having a frequency lower than the cut-off frequency of the first low-pass filter.

Thus, besides a pulse or a wireless signal, the trigger module may also be triggered by a low-frequency control signal, which comprises a frequency higher than the frequency of the power carrying current and lower than the frequencies of the communication channels. In this way, no interference between the communication channels on the one hand and the low-frequency control signal on the other hand occurs.

According to an embodiment, the filtering device is configured to adjust the cut-off frequency based on a load in the power line communication network.

Additionally, the cut-off frequency of the first low-pass filter may be adapted during operation of the power line communication system such that an adaption to a changing load is performed in a fast manner.

According to a second aspect, the disclosure relates to a protecting device for protecting a power line branch in a power line communication network, the protecting device comprising an interrupting module having a first and a second contact and triggerable when an overcurrent and/or overload is detected, the protecting device further comprising the filtering device according to the first aspect of the disclosure, and wherein the first contact of the interrupting module is connected to the first contact of the filtering device, and wherein the first contact of the interrupting module and the second contact of the filtering device corresponds to a first and a second output contact of the protecting device.

In other words, the filtering device is connected in series with a fuse or a circuit breaker or any other interrupting module suitable for interrupting an overcurrent and/or overload in a circuit. The protecting device comprises the filtering device and the interrupting module such that it may be easily installed in the electrical installation in order to protect a power line branch. The protecting device has thus two output contacts, whereby one may be connected to a power source and the other one to the power branch that is protected by the device itself. In this way, the set-up of the electrical installation and adaption to a power line communication network is performed in a fast and straightforward way.

According to an embodiment, the protecting device further comprises a second low-pass filter and a high-pass filter, and wherein the second low-pass filter and the high-pass filter each comprise a source port and a filtered port, and wherein the source ports are connected to the second contact of the interrupting module, and wherein the filtered port of the second low-pass filter and the second contact of the filtering device corresponds to a first and a second output contact of the protecting device.

In other words, the second low-pass filter is connected in series with the interrupting module and the filtering device. In this way, the filtering device comprises a fixed low-pass filter, the second low-pass filter, on one side and a switchable low-pass filter, the first low-pass filter, on the other side. Communication channels originating from the side of the second low-pass filter are in this way continually filtered, while at the other side, the side of the first low-pass filter, the channels are filtered depending on the position of the switch. Next, the high-pass filter is connected to the second low-pass filter and the interrupting module. In other words, the high-pass filter is branched off from the connection between the interrupting module and the second low-pass filter. The high-pass filter thus branches off and guides communication channels from the interrupting module to its filtered port which corresponds to a second output of the protecting device. This second output may then be connected to a corresponding output of a second protecting device. Additionally, more than one high-pass filters may be present such that they are placed in, for example, a daisy chain.

According to an embodiment, a cut-off frequency of the second low-pass filter corresponds to a power current frequency.

In other words, the cut-off frequency of the second low-pass filter corresponds either to 50Hz or 60Hz depending on the region wherein the protecting device is deployed.

According to an embodiment, a cut-off frequency of the second low-pass filter is lower than the cut-off frequency of the first low-pass filter.

The cut-off frequency of the second low-pass filter may also have a different value than the frequency of the power carrying current, whereby it is lower than the cut-off frequency of the first low-pass filter.

According to a third aspect, the disclosure relates to an electric switchboard for directing electrical power from a power source to one or more power line branches, the electric switchboard comprising at least two of the protecting devices according to the second aspect of the disclosure, wherein the filtered ports of the second low-pass filters of the protecting devices are connected to the power source, and wherein the filtered ports of the first high-pass filters of the first protecting device are connected to each other.

A plurality of protecting devices are thus deployed in the electrical installation such that this electrical installation may be adapted to a power line communication network in an optimized manner.

According to an embodiment, the electric switchboard further comprises a dynamic spectrum management module configured to generate the control signals of each of the trigger modules.

Advantageously, each of the protecting devices and more in particular the trigger modules thereof may be managed remotely by the dynamic spectrum management module. Furthermore, in this way an accurate overview of the electrical installation with respect to the power line communication network is obtained.

### Brief Description of the Drawings

Fig. 1a illustrates a filtering device in a pass-through mode and Fig.1b illustrates the filtering device in a filtering mode according to an embodiment of the invention; and
Fig. 2 illustrates a filtering device comprising a trigger module according to an embodiment of the invention; and
Fig. 3 illustrates a protecting device comprising a filtering device according to an embodiment of the invention; and
Fig. 4 illustrates a protecting device comprising a filtering device, a low-pass filter and a high-pass filter according to an embodiment of the invention; and
Fig. 5 illustrates an electric switchboard comprising protecting devices and filtering devices according to an embodiment of the invention; and
Fig. 6 illustrates a gain-magnitude frequency response of a first-order low-pass filter incorporated in a filtering device according to an embodiment of the invention.

### Detailed Description of Embodiment(s)

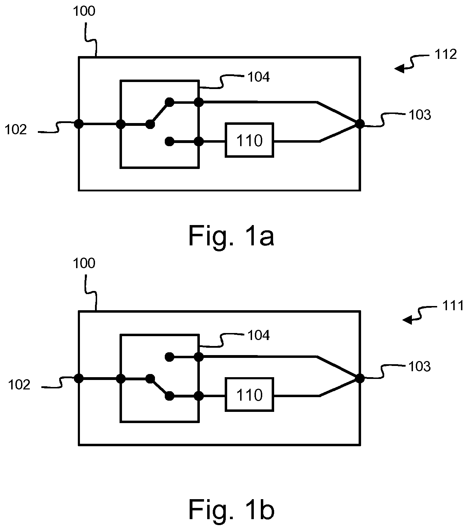

According to an embodiment, the invention relates to a filtering device for filtering communication channels on a power line branch in a power line communication network. Figures 1a and 1b schematically illustrate such a device. The filtering device 100 comprises two contacts 102 and 103 to connect the device 100 to an electrical circuit. The device 100 further comprises a switch 104 and a first low-pass filter 110.

The filtering device 100 is configured to be set in either a pass-through mode 112 or a filtering mode 111, which are respectively schematically illustrated by Fig. 1a and 1b. To change between the modes 112 or 111, the switch 104 is switched. In the pass-through mode 112 the contacts 102 and 103 are directly connected to each-other, for example, by an electrical wire. In other words, in the pass-through mode 112 the contacts are connected to each-other with a wire comprising a low ohmic resistance such that signals and/or current are passed through without attenuating them, or at least minimizing any attenuation. The electrical wire is thus, for example, a copper wire.

In the filtering mode 111, the contacts 102 and 103 are connected to each-other by the first low-pass filter 110. The first low-pass filter 110 comprises two contacts from which one is connected to contact 102 through, for example, a copper wire, and a second contact of the first low-pass filter 110 is connected to contact 103. In this way, signals and/or current flowing from contact 102 to 103 or vice versa are guided through the first low-pass filter 110.

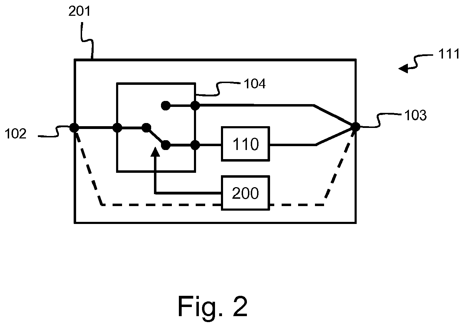

As illustrated in Figure 2, the filtering device comprises, according to an embodiment, a trigger module. The trigger module 200 incorporated in the filtering device 201, and schematically illustrated in the filtering mode 111, triggers the switch 104 based on a control signal. The triggering implies that the filtering device 201 switches between the filtering mode 111 and the pass-through mode 112. This control signal may, for example, be received by one of the contacts 102 and 103, as illustrated by the dashed lines. Alternatively, the control signal may also be received through an interface and/or external contact. It should furthermore be clear that the trigger module 200, when receiving the control signal through contacts 102 and/or 103 does not introduce an additional connection between the contacts 102 and 103.

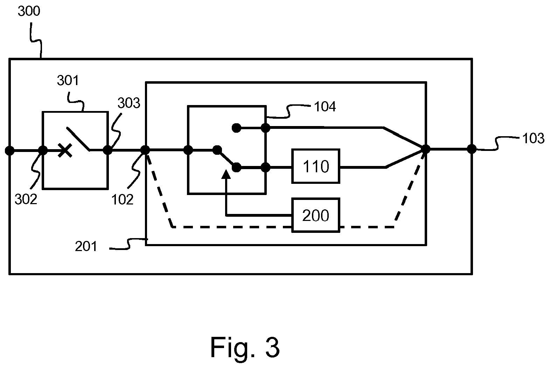

The filtering device 100, or 201, may, according to an embodiment, be incorporated in a protecting device, as schematically illustrated in Figure 3. The protecting device 300 comprises the filtering device 201, which on its behalf comprises a trigger module 200, but is should be obvious that the protecting device 300 may also comprises a filtering device 100 without a trigger module 200.

The protecting device 300 further comprises an interrupting module 301 having a first 302 and a second 303 contact and the interrupting module 301 is configured to interrupt a current flowing from the first 302 to the second 303 contact or vice versa, when an overload and/or overcurrent is detected. Such an overcurrent may, for example, be caused by a short circuit.

One contact of the interrupting module 301 is connected to a contact of the filtering device 201. In this illustration of Fig. 3 the contact 303 of the interrupting module 301 is connected to the contact 102 of the filtering device 201. The other contact 302 of the interrupting module 301 and the other contact 103 of the filtering device 201 are then the outer connecting contacts such that the protecting device 300 may be placed in series with a power branch.

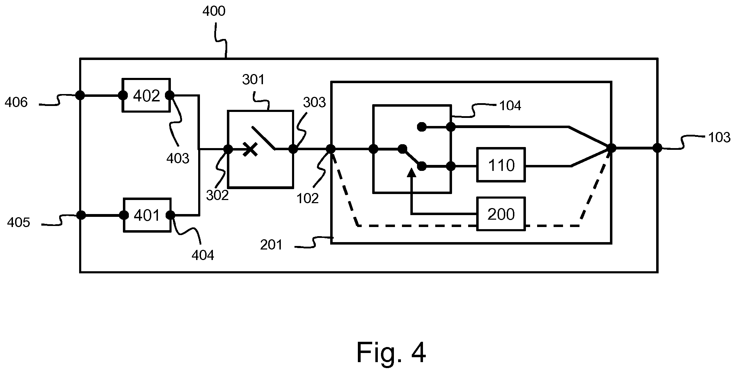

The protecting device may further, according to an embodiment, comprises a second low-pass filter and a high-pass filter, as schematically illustrated by Fig. 4. The protecting device 400 comprises, besides the filtering device 201 and the interrupting module 301, the second low-pass filter 401 and the high-pass filter 402. The second low-pass filter 401 as well as the high-pass filter 402 both comprise a source port, respectively 404 and 403, and a filtered port, respectively 405 and 406. The source ports 404 and 403 are connected to the contact 302 of the interrupting module 301. The filtered ports 405 and 406 are then replacing the contact 302 of the interrupting module 301 as the outer contact of the protecting device 400. Thus, in the embodiment of the protecting device 400, three outer contacts 103, 405 and 406 are present.

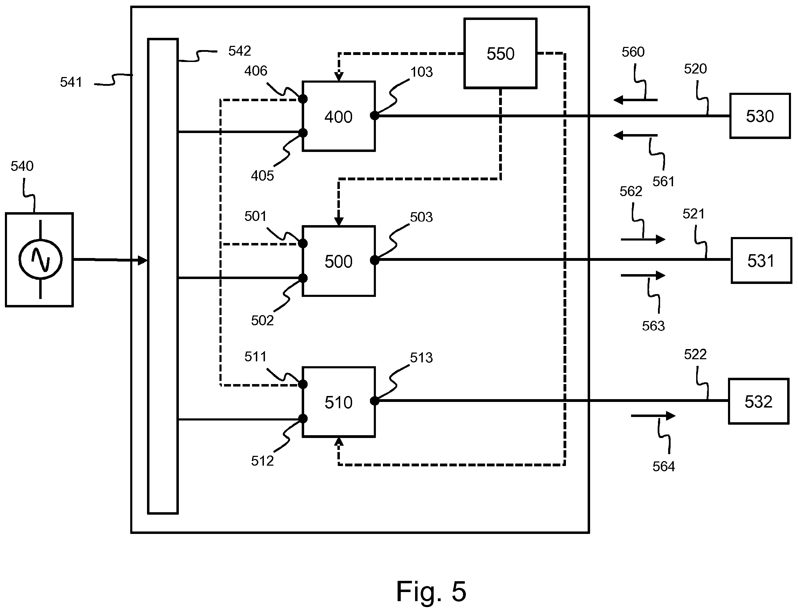

The filtering operation of the filtering device 201 incorporated in the protecting device 400 will now be further explained by Figure 5, which schematically represents an electric switchboard. The electric switchboard 541 is, for example, a domestic electric switchboard to provide electric power in rooms of a house. In this exemplary illustration, the electric switchboard 541 and the electrical installation connected to it, is utilized for power line communication between different devices in the house.

The electric switchboard 541 illustrated by Fig. 5 comprises three protecting devices as schematically illustrated in Fig. 4, namely protecting device 400, 500, and 510. Each protecting device comprises three output contacts, but a protecting device according to device 300 may also be combined therewith. For the protecting device 400, these output contacts are 103, 405, and 406, which correspond to the contacts as illustrated in Fig. 4.

The protecting device 500 has a first output contact 503, which corresponds to the contact of a filtering device incorporated in the protecting device 500. The second output contact 501 corresponds to the filtered port of a high-pass filter incorporated in the protecting device 500. The third output contact 502 corresponds to the filtered port of a second low-pass filter incorporated in the protecting device 500.

The protecting device 510 has a first output contact 513, which corresponds to the contact of a filtering device incorporated in the protecting device 510. The second output contact 511 corresponds to the filtered port of a high-pass filter incorporated in the protecting device 510. The third output contact 512 corresponds to the filtered port of a second low-pass filter incorporated in the protecting device 510.

The electric switchboard 541 further comprises a busbar 542 which is on one side connected to an electric power source 540. At the other side of the bus bar 542 power branches are branched off. These power branches, as illustrated by power branches 520, 521, and 522, direct electric power from the source 540 to sockets and other power ports in the house. The number of power branches in a house depends on the configuration thereof but comprises in real-life situations generally more than three branches. Nevertheless, in this illustration, three power branches are represented, wherein, for example, power branch 520 directs current to a home office 530, power branch 521 directs current to a living room 531, and power branch 522 directs current to a kitchen 532. The flow of electric currents is not illustrated, but it is obvious to the skilled person that electric power from the source 540, via the busbar 542 flows to electric devices in the different rooms 530, 531, and 532 through a closed circuit.

In the home office 530 sockets are present connected to the power branch 520. Furthermore, in the home office 530 a router connected to the internet is present as well. This router is, for example, connected to a telephony line when using a digital subscriber line, DSL, or to an infrastructure of cable television when using cable internet access, or any other network used to provide internet access. Anyhow, it should be clear that the internet connection is a separate connection and initially not connected to the power branch 520.

In the living room 531 a smart tv is present and is connected to the internet through a wire. In other words, the smart tv in the living room 531 is connected to the router in the home office 530 from an internet access point of view. This connection is carry out using a power line communication system. To achieve this, custom made adapters are used and connected to sockets of both the home office 530 and the living room 531. In other words, an adapter in a socket in the home office 530 exchanges data packets with an adapter in a socket in the living room 531. In the kitchen 532 no internet connection is present.

Given this scheme, the interrupting devices 400, 500, and 510, and more in particular their respective filtering devices, are set in such a way that the connection between the adapter in the home office 530 and the adapter in the living room 531 is optimal from a communication signal point of view.

The filtering devices of interrupting devices 400 and 500 are set in the pass-through mode, while the filtering device of interrupting module 510 is set in the filtering mode. According to an embodiment, the filtering devices may also be placed in series with the power branches between an interrupting device on one side, and sockets and/or power ports on the other side.

Communication channels originating from the router in the home office 530 and represented by arrow 560 are guided through the protecting device 400. With reference to Fig. 4, the communication signals are thus first received at contact 103. Since the filtering device 201 of protecting device 400 is in the pass-through mode, the communication channels are directly guided to contact 102, and thus not through the low-pass filter 110. Next, the communication channels are guided through the interrupting module 301. In the embodiment of the interrupting device according to Fig. 3, the communication channels are then guided into the bus bar 542. Through the bus bar 542, the communication channels are distributed over the difference power branches to communicate with devices connected through custom made adapters. In the kitchen 532 such an adapter is not present, such that a filtering device placed in series in the power branch 522 is set in its filtering mode. In this way, communication channels originating from the bus bar 542 are blocked for the power branch 522. On the other hand, since the smart tv in the living room 531 is configured to receive communication channels, illustrated by arrow 562, the filtering device in series with power branch 521 is set in its pass-through mode.

According to the embodiments illustrated in Fig. 4 and Fig. 5, the interrupting devices 400, 500, and 510 comprises each a second low-pass filter and a high-pass filter. Thus, in the illustration of Fig. 5, with communication channels originating from the home office 530 and illustrated by arrow 560 are guided to the living room 531 and illustrated by arrow 562. Thus, the filtering devices of interrupting devices 400 and 500 are set in the pass-through mode and the filtering device of interrupting device 510 in its filtering mode. Thus, communication signals received at contact 302 of the interrupting module 301 of interrupting device 400 are guided through the high-pass filter 402 and blocked by the second low-pass filter 401. Thus, at output contact 406 the communication channels are presents. On the other hand, power carrying current at contact 302 are guided through the second low-pass filter 401 and blocked by the high-pass filter 402. Next, contact 406 is connected to contacts 501 and 511. The communication channels are thus initially guided to the interrupting devices 500 and 510 by their respective output contacts 501 and 511. Next, since the filtering device of interrupting device 510 is set in the filtering mode, the communication channels are blocked to the kitchen 532, while the filtering device of interrupting device 500 is set in the pass-through mode and thus the communication channels are guided to the living room 531.

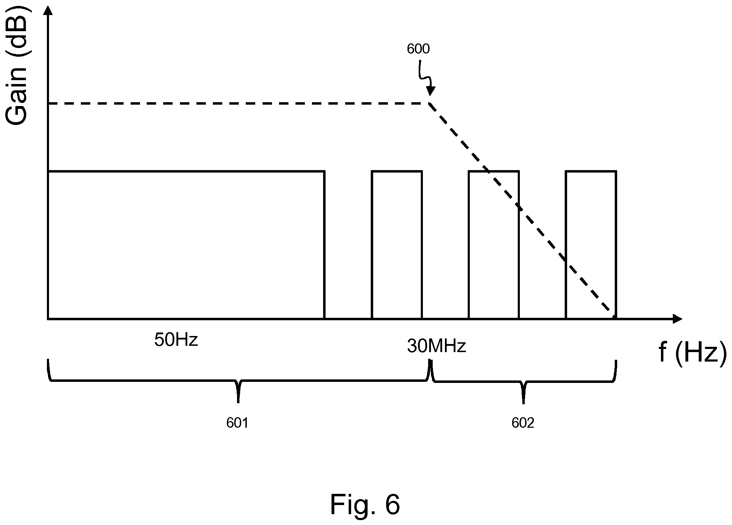

To block the communication channels and pass through the power carrying currents, the cut-off frequency of the first and/or second low pass filters is set such that frequencies of power carrying current are passed through. This is illustrated in Figure 6. The cut-off frequency may thus, for example, be set at 30MHz, but this cut-off frequency may be adapted depending on the used power line communication system standard. The frequencies in the range illustrated by 601 are then passed through, while the frequencies in the range illustrated by 602 are attenuated and ideally blocked.

The filtering devices of the interrupting devices 400, 500, and 510 may be manually set in the mode as already discussed. This is, for example, advantageously when in advance it is known between which power branches the communication channels needs be guided, and when the configuration will be maintained over a long-time period. The switching may also be performed through the trigger module, for example for interrupting device 400 by trigger module 200. The triggering may then be performed by a dynamic management module 550, which generated control signals to trigger each of the trigger modules of interrupting devices 400, 500, and 510. Such a control signals is, for example, a radio signal and is illustrated by dashed lines originating from the dynamic spectrum management module 550.

A control signal may also originate from devices located in 530, 531 and/or 532 and be guided through over contacts 103, 503 and/or 513.

The control signals may also be generated by, for example, the router in the home office 530 or any other device suitable to generate control signals to trigger the trigger modules. The generated control signals are then injected in the power branches. A control signal is, for example, illustrated by arrow 561, which is directed to the different trigger modules of the interrupting devices, and thus to the power branches of the electrical installation. In power branch 521, the received control signal is illustrated by arrow 563, while the received control signal received in power branch 522 is illustrated by arrow 564.

Contrary to the communication channels, the control signals 561, 563, and 564 are not attenuated by first and/or second low-pass filter. In this way, a full control is maintained over the trigger modules. The frequencies of the control signals are thus, for example, within the frequency range 601 as illustrated in Fig. 6.

## Claims

1. A filtering device (100) for filtering communication channels on a power line branch in a power line communication network, the filtering device (100) having a first (102) and a second (103) contact, the filtering device (100) comprising a switch (104) configured to switch between a pass-through mode (110) and a filtering mode (111), wherein:
- in the pass-through mode (112) the first contact (102) is directly connected with the second (103) contact and configured to pass through a power current frequency and the communication channels; and
- in the filtering mode (111) the first contact (102) is connected with the second contact (103) through a first low-pass filter (110);
**characterized in that** a cut-off frequency (600) of the first low-pass filter (110) is configured to pass through (601) the power carrying current and to block (602) one or more of the communication channels; and that the filtering device is further configured to adjust the cut-off frequency (600) of the first low-pass filter (110) such that one or more communication channels are pass through in the filtering mode (111).

2. The filtering device (201) according to claim 1, further comprising a trigger module (200) configured to trigger the switch (104) based on a control signal.

3. The filtering device (201) according to claim 2, wherein the trigger module (200) is further configured to receive the control signal through the first (102) and/or second (103) contact.

4. The filtering device (201) according to claim 3, wherein the control signal is a low-frequency control signal having a frequency lower than the cut-off frequency (600) of the first low-pass filter (110).

5. The filtering device (100, 201) according to any of the preceding claims, further configured to adjust the cut-off frequency (600) based on a load in the power line communication network.

6. A protecting device (300) for protecting a power line branch in a power line communication network, the protecting device (300) comprising an interrupting module (301) having a first (302) and a second (303) contact and triggerable when an overcurrent and/or overload is detected, the protecting device (300) further comprising the filtering device (100) according to any of the preceding claims, and wherein the first contact (302) of the interrupting module (301) is connected to the first contact (102) of the filtering device, and wherein the first contact (302) of the interrupting module (301) and the second contact (103) of the filtering device (100) corresponds to a first (302) and a second (103) output contact of the protecting device (300).

7. The protecting device (400) according to claim 6, further comprising a second low-pass filter (401) and a high-pass filter (402), and wherein the second low-pass filter (401) and the high-pass filter (402) each comprise a source port (403, 404) and a filtered port (405, 406), and wherein the source ports (403, 404) are connected to the second contact (302) of the interrupting module (301), and wherein the filtered port 405) of the second low-pass filter (401) and the second contact (103) of the filtering device (100) correspond to a first (405) and a second (103) output contact of the protecting device (400).

8. The protecting device (400) according to claim 7, wherein a cut-off frequency of the second low-pass filter (401) corresponds to a power current frequency.

9. The protecting device (300) according to claim 7, wherein a cut-off frequency of the second low-pass filter (401) is lower than the cut-off frequency of the first low-pass filter (110).

10. An electric switchboard (541) for directing electrical power from a power source (540) to one or more power line branches (520, 521, 522), the electric switchboard (541) comprising at least two of the protecting devices (400, 500, 510) according to claim 7, wherein the filtered ports (405, 502, 512) of the second low-pass filters of the protecting devices (400, 500, 510) are connected to the power source (540), and wherein the filtered ports (406, 501, 511) of the first high-pass filters of the first protecting device (400, 500, 510) are connected to each other.

11. The electric switch board (541) according to claim 10, further comprising a dynamic spectrum management module (550) configured to generate the control signals of each of the trigger modules.

## Patentansprüche

1. Filtervorrichtung (100) zum Filtern von Kommunikationskanälen in einem Leistungsleitungszweig in einem Leistungsleitungskommunikationsnetzwerk, wobei die Filtervorrichtung (100) einen ersten (102) und einen zweiten (103) Kontakt aufweist, wobei die Filtervorrichtung (100) einen Schalter (104) umfasst, der dazu ausgelegt ist, zwischen einem Durchleitungsmodus (110) und einem Filtermodus (111) umzuschalten, wobei:
- der erste Kontakt (102) im Durchleitungsmodus (112) direkt mit dem zweiten (103) Kontakt verbunden und dazu ausgelegt ist, eine Leistungsstromfrequenz und die Kommunikationskanäle durchzuleiten; und
- der erste Kontakt (102) im Filtermodus (111) über ein erstes Tiefpassfilter (110) mit dem zweiten Kontakt (103) verbunden ist;
**dadurch gekennzeichnet, dass** eine Grenzfrequenz (600) des ersten Tiefpassfilters (110) dazu ausgelegt ist, den Leistungsstrom durchzuleiten (601) und einen oder mehrere der Kommunikationskanäle zu blockieren (602); und dass die Filtervorrichtung ferner dazu ausgelegt ist, die Grenzfrequenz (600) des ersten Tiefpassfilters (110) derart anzupassen, dass im Filtermodus (111) ein oder mehrere Kommunikationskanäle durchgeleitet werden.

2. Filtervorrichtung (201) nach Anspruch 1, die ferner ein Auslösemodul (200) umfasst, das dazu ausgelegt ist, den Schalter (104) auf Basis eines Steuersignals auszulösen.

3. Filtervorrichtung (201) nach Anspruch 2, wobei das Auslösemodul (200) ferner dazu ausgelegt ist, das Steuersignal über den ersten (102) und/oder den zweiten (103) Kontakt zu empfangen.

4. Filtervorrichtung (201) nach Anspruch 3, wobei das Steuersignal ein Niederfrequenzsteuersignal ist, das eine Frequenz aufweist, die niedriger ist als die Grenzfrequenz (600) des ersten Tiefpassfilters (110).

5. Filtervorrichtung (100, 201) nach einem der vorhergehenden Ansprüche, die ferner dazu ausgelegt ist, die Grenzfrequenz (600) auf Basis einer Last im Leistungsleitungskommunikationsnetzwerk anzupassen.

6. Schutzvorrichtung (300) zum Schützen eines Leistungsleitungszweigs in einem Leistungsleitungskommunikationsnetzwerk, wobei die Schutzvorrichtung (300) ein Unterbrechungsmodul (301) umfasst, das einen ersten (302) und einen zweiten (303) Kontakt aufweist und auslösbar ist, wenn ein Überstrom und/oder eine Überlast detektiert wird, wobei die Schutzvorrichtung (300) ferner die Filtervorrichtung (100) nach einem der vorhergehenden Ansprüche umfasst und wobei der erste Kontakt (302) des Unterbrechungsmoduls (301) mit dem ersten Kontakt (102) der Filtervorrichtung verbunden ist und wobei der erste Kontakt (302) des Unterbrechungsmoduls (301) und der zweite Kontakt (103) der Filtervorrichtung (100) einem ersten (302) und einem zweiten (103) Ausgangskontakt der Schutzvorrichtung (300) entspricht.

7. Schutzvorrichtung (400) nach Anspruch 6, die ferner ein zweites Tiefpassfilter (401) und ein Hochpassfilter (402) umfasst und wobei das zweite Tiefpassfilter (401) und das Hochpassfilter (402) jeweils einen Quellanschluss (403, 404) und einen gefilterten Anschluss (405, 406) umfasst und wobei die Quellanschlüsse (403, 404) mit dem zweiten Kontakt (302) des Unterbrechungsmoduls (301) verbunden sind und wobei der gefilterte Anschluss (405) des zweiten Tiefpassfilters (401) und der zweite Kontakt (103) der Filtervorrichtung (100) einem ersten (405) und einen zweiten (103) Ausgangskontakt der Schutzvorrichtung (400) entsprechen.

8. Schutzvorrichtung (400) nach Anspruch 7, wobei eine Grenzfrequenz des zweiten Tiefpassfilters (401) einer Leistungsstromfrequenz entspricht.

9. Schutzvorrichtung (300) nach Anspruch 7, wobei eine Grenzfrequenz des zweiten Tiefpassfilters (401) niedriger ist als die Grenzfrequenz des ersten Tiefpassfilters (110).

10. Elektrische Schalttafel (541) zum Leiten von elektrischer Leistung von einer Leistungsquelle (540) zu einem oder mehreren Leistungsleitungszweigen (520, 521, 522), wobei die elektrische Schalttafel (541) mindestens zwei der Schutzvorrichtungen (400, 500, 510) nach Anspruch 7 umfasst, wobei die gefilterten Anschlüsse (405, 502, 512) des zweiten Tiefpassfilters der Schutzvorrichtungen (400, 500, 510) mit der Leistungsquelle (540) verbunden sind und wobei die gefilterten Anschlüsse (406, 501, 511) des ersten Hochpassfilters der ersten Schutzvorrichtung (400, 500, 510) miteinander verbunden sind.

11. Elektrische Schalttafel (541) nach Anspruch 10, die ferner ein Verwaltungsmodul (550) mit dynamischem Spektrum umfasst, das dazu ausgelegt ist, die Steuersignale von jedem der Auslösemodule zu erzeugen.

## Revendications

1. Dispositif de filtrage (100) pour le filtrage de canaux de communication sur une branche de ligne d'alimentation dans un réseau de communication par ligne d'alimentation, le dispositif de filtrage (100) ayant un premier (102) et un second (103) contact, le dispositif de filtrage (100) comprenant un commutateur (104) configuré pour commuter entre un mode laissez-passer (110) et un mode de filtrage (111), dans lequel :
- dans le mode laissez-passer (112), le premier contact (102) est directement connecté au second (103) contact et configuré pour laisser passer une fréquence de courant d'alimentation et les canaux de communication ; et
- dans le mode de filtrage (111), le premier contact (102) est connecté au second contact (103) par le biais d'un premier filtre passe-bas (110) ;
**caractérisé en ce qu'**une fréquence de coupure (600) du premier filtre passe-bas (110) est configurée pour laisser passer (601) le courant porteur d'alimentation et pour bloquer (602) l'un ou plusieurs des canaux de communication ; et **en ce que** le dispositif de filtrage est en outre configuré pour ajuster la fréquence de coupure (600) du premier filtre passe-bas (110) de sorte qu'un ou plusieurs canaux de communication laissés passer dans le mode de filtrage (111).

2. Dispositif de filtrage (201) selon la revendication 1, comprenant en outre un module déclencheur (200) configuré pour déclencher le commutateur (104) sur la base d'un signal de commande.

3. Dispositif de filtrage (201) selon la revendication 2, dans lequel le module déclencheur (200) est en outre configuré pour recevoir le signal de commande par le biais du premier (102) et/ou du second (103) contact.

4. Dispositif de filtrage (201) selon la revendication 3, dans lequel le signal de commande est un signal de commande à basse fréquence ayant une fréquence inférieure à la fréquence de coupure (600) du premier filtre passe-bas (110).

5. Dispositif de filtrage (100, 201) selon l'une quelconque des revendications précédentes, configuré en outre pour ajuster la fréquence de coupure (600) sur la base d'une charge dans le réseau de communication par ligne d'alimentation.

6. Dispositif de protection (300) pour la protection d'une branche de ligne d'alimentation dans un réseau de communication par ligne d'alimentation, le dispositif de protection (300) comprenant un module d'interruption (301) ayant un premier (302) et un second (303) contact et apte à être déclenché lorsqu'une surintensité et/ou une surcharge est détectée, le dispositif de protection (300) comprenant en outre le dispositif de filtrage (100) selon l'une quelconque des revendications précédentes, et dans lequel le premier contact (302) du module d'interruption (301) est connecté au premier contact (102) du dispositif de filtrage, et dans lequel le premier contact (302) du module d'interruption (301) et le second contact (103) du dispositif de filtrage (100) correspondent à un premier (302) et un second (103) contact de sortie du dispositif de protection (300).

7. Dispositif de protection (400) selon la revendication 6, comprenant en outre un second filtre passe-bas (401) et un filtre passe-haut (402), et dans lequel le second filtre passe-bas (401) et le filtre passe-haut (402) comprennent chacun un port de source (403, 404) et un port filtré (405, 406), et dans lequel les ports de source (403, 404) sont connectés au second contact (302) du module d'interruption (301), et dans lequel le port filtré (405) du second filtre passe-bas (401) et le second contact (103) du dispositif de filtrage (100) correspondent à un premier (405) et un second (103) contact de sortie du dispositif de protection (400).

8. Dispositif de protection (400) selon la revendication 7, dans lequel une fréquence de coupure du second filtre passe-bas (401) correspond à une fréquence de courant d'alimentation.

9. Dispositif de protection (300) selon la revendication 7, dans lequel une fréquence de coupure du second filtre passe-bas (401) est inférieure à la fréquence de coupure du premier filtre passe-bas (110).

10. Tableau électrique (541) pour diriger une alimentation électrique d'une source d'alimentation (540) vers une ou plusieurs branches de ligne d'alimentation (520, 521, 522), le tableau électrique (541) comprenant au moins deux des dispositifs de protection (400, 500, 510) selon la revendication 7,
dans lequel les ports filtrés (405, 502, 512) des seconds filtres passe-bas des dispositifs de protection (400, 500, 510) sont connectés à la source d'alimentation (540), et dans lequel les ports filtrés (406, 501, 511) des premiers filtres passe-haut du premier dispositif de protection (400, 500, 510) sont connectés les uns aux autres.

11. Tableau électrique (541) selon la revendication 10, comprenant en outre un module de gestion de spectre dynamique (550) configuré pour générer les signaux de commande de chacun des modules déclencheurs.
